**Europäisches Patentamt**

**European Patent Office**

**Office européen des brevets**

(19)

(11) Veröffentlichungsnummer: **0 192 715**
**B1**

(12) # EUROPÄISCHE PATENTSCHRIFT

(45) Veröffentlichungstag der Patentschrift:
18.05.88

(51) Int. Cl.⁴: **B 65 G 15/16**

(21) Anmeldenummer: **85904422.4**

(22) Anmeldetag: **30.08.85**

(86) Internationale Anmeldenummer:
**PCT/DE 85/00297**

(87) Internationale Veröffentlichungsnummer:
**WO 86/01491 (13.03.86 Gazette 86/06)**

(54) **DOPPELGURTBANDFÖRDERER.**

(30) Priorität: **05.09.84 DE 3432553**

(43) Veröffentlichungstag der Anmeldung:
**03.09.86 Patentblatt 86/36**

(45) Bekanntmachung des Hinweises auf die Patenterteilung:
**18.05.88 Patentblatt 88/20**

(84) Benannte Vertragsstaaten:
**AT BE CH DE FR GB IT LI LU NL SE**

(56) Entgegenhaltungen:
**FR-A-731 908**
**FR-A-1 250 799**
**GB-A-104 775**
**US-A-2 670 837**
**US-A-4 382 502**

(73) Patentinhaber: **Friedrich Wilh. Schwing GmbH, Heerstrasse 11, D-4690 Herne 2 (DE)**

(72) Erfinder: **SCHWING, Friedrich, Wilhelm, Dorstener Str. 424, D-4690 Herne 2 (DE)**
Erfinder: **SCHWING, Gerhard, Holbeinstr. 3, D-4690 Herne 2 (DE)**

(74) Vertreter: **Herrmann- Trentepohl, Werner, Dipl.-Ing., Postfach 1140 Schaeferstrasse 18, D-4690 Herne 1 (DE)**

EP 0 192 715 B1

## Beschreibung

Die Erfindung betrifft einen Doppelgurtbandförderer gemäß dem Oberbegriff des Anspruches 1.

Die erfindungsgemäßen Doppelgurtbandförderer dienen zum Transport von Stoffen, welche auf einer steilen Förderstrecke eines Förderbandes von dem fördernden Ober- oder Untergurt abrutschen oder abrollen würden. Bei Schüttgütern beträgt der Grenzwinkel für die Förderung dieser Stoffe auf Bändern zwischen 30 bis 35°. Im allgemeinen hängt er außer von den Bedingungen, die das Fördergut der Bandförderung besitzt, auch von der Bandgeschwindigkeit ab, welche jedoch im Einblick auf die Schleuderwirkung des Bandabwurfes nicht beliebig gesteigert werden kann. Dabei spielt in vielen Fällen die Gefahr von Entmischungen eine Rolle. Das gilt insbesondere für Schütt- und Fördergüter ähnlicher Konsistenz, worunter auch Beton fällt. Der erfindungsgemäße Doppelgurtbandförderer eignet sich für die Förderung der erwähnten Stoffe, weil er mit einer wählbaren Bandgeschwindigkeit betrieben werden kann, die dementsprechend auf die Entmischungsgefahr Rücksicht nimmt, aber die Förderwirkung nicht beeinträchtigt.

Die erfindungsgemäßen Doppelgurtbandförderer haben gegenüber Becherwerken einen hohen Gleichförmigkeitsgrad, erfordern jedoch einen wesentlich geringeren technischen Aufwand als diese und werden bei klebenden oder viskosen Fördergütern auch wesentlich weniger durch das Fördergut verschmutzt. Das beruht darauf, daß die für die Ausbildung des Förderraumes auf den Steil strecken zwischen den Führungen ausgebildeten Einbeulungen hinter der Steilstrecke durch die Ausbeulungen wieder rückgängig gemacht werden, so daß sich die flache Form des Fördergurtes mindestens auf den Kehren wieder einstellt.

Die Erfindung geht aus von einem vorbekannten Doppelgurtbandfördere gemäß der FR-A-731 908. Hierbei sind das Deckband und das Förderband als glatte Fördergurte ausgebildet. Die Längs seiten der Kanten beider Gurte sind in Führungen aufeinanderliegend gehalten. Beide Gurte bilden einen im Querschnitt linsenförmigen Förderraum. Die Mitnahmewirkung beruht auf der inneren Reibung des Fördergutes, welche durch den nach innen gerichteten Druck der mittleren Abschnitte beider Fördergurte zwischen den Führungen erhöht wird. Das wirkt sich auf stark klebendes bzw. schlammförmiges oder stark rieselfähiges Fördergut nachteilig aus. Außerdem ist die innere Reibung insbesondere bei schlammförmigen Gütern auch bei Anwendung erheblich höherer Drücke zu gering, um auf steilen Förderstrecken den für den Transport erforderlichen geringen Schlupf zwischen Fördergut und -gut zu erreichen. Je flüssiger, leichter rieselfähig bzw. je feinkörniger das Fördergut ist, desto nachteilhafter wird die vorbekannte Anordnung.

Der Erfindung liegt die Aufgabe zugrunde, bei einem Doppelgurtbandförderer der als bekannt vorausgesetzten Art auch bei klebrigen und schlammförmigen bzw. stark rieselfähigen Schüttgütern eine noch befriedigende stetige Transportwirkung zu erzielen, ohne daß eine im Hinblick auf die Entmischungsgefahr überhöhte Bandgeschwindigkeit angewandt werden muß.

Diese Aufgabe löst die Erfindung mit den kennzeichnenden Merkmalen des Anspruchs 1. Zweckmäßige Ausführungsformen der Erfindung sind Gegenstand der Unteransprüche.

Die gemäß der Erfindung in den Längsseiten des Deckbandes und damit unterhalb des mit dem Förderband dichtenden Deckbandmaterials angeordneten Längsarmierungen übertragen die Zugbeanspruchungen des Fördergurtes und verhindern dadurch Verformungen des Gurtes in Richtung auf den Förderraum. Die Querarmierungen übertragen zwischen den Deckbandkanten Druck- und Zugkräfte. Die Einbeulungen liegen damit zwischen den beschriebenen Bereichen des Förderbandes, welche annähernd leiternförmig verlaufen, wobei die Längskanten den außen liegenden Holmen und die sie verbindenden, über den schubsteifen Querarmierungen liegenden Bandkanten den Sprossen folgen. Dadurch ergibt sich eine Mehrzahl von Aus- bzw. Einbeulungen zwischen den beschriebenen flachen Bereichen des Deckbandgurtes, auf denen eine Deformation des Gurtes nicht eintritt. Daher lassen sich die Gurtlängskanten auf ihrer vollen Länge in den durchgehend ausgebildeten Führungen auf das Förderband pressen, wodurch ein gleichmäßiger Dichtdruck erzielt wird, der den Förderraum auch gegen dünnflüssiges Fördergut nach außen abdichtet. Andererseits bilden die den Sprossen entsprechenden flachen Bereiche die in den Förderraum vorstehenden Begrenzungen der Einbeulungen, so daß der Abstand der schubfesten Querarmierungen die Anzahl von über eine gegebene Steilstrecke wirksamen Mitnehmern vorgibt, vor denen sich das der Schwerkraft folgende Fördergut aufstaut.

Die Erfindung wird zweckmäßig mit den Merkmalen des Anspruches 2 ausgeführt. Da hierbei das Gurtmaterial zwischen den Längs- und Querarmierungen nicht armiert und aufgrund des üblicherweise für derartige Gurte verwendeten elastischen bzw. elastomeren Gummimaterials oder Kunststoffes entropielastisch ist, läßt sich die für das Ein- und Ausbeulen erforderliche Energie gering halten, wodurch die Materialbeanspruchung in Grenzen bleibt.

Wenn man die Erfindung mit den Merkmalen des Anspruches 3 praktisch verwirklicht und dementsprechend die einbeulbaren Felder des Deckbandgurtes muldenförmig ausformt, stellt sich die für die Mitnahmewirkung entscheidende Form der Einbeulungen am Beginn der Steilstrecke selbsttätig und entsprechend der vorgewählten Form ein. Hierbei kann das Ausbeulen derart vorgegeben werden, daß sich auch hinter der Kehre eine flache Form des Deckbandgurtes einstellt.

Insbesondere die letztere Formgebung ist geeignet, die Merkmale des Anspruches 4 zu verwirklichen, mit denen eine vollständige Säuberung des Deckbandes von dem mitgenommenen Fördergut möglich ist.

Mit den Merkmalen des Anspruches 5 lassen sich die Einbeulungen in gegeneinander abgeschlossene Abteilungen ausbilden, welche in ihrer Aufeinanderfolge den Förderraum bilden. Dann ist es möglich, den Schlupf zwischen dem Fördergut und den Gurten auf die Abteile zu begrenzen und ihn dadurch gering zu halten.

Die Erfindung hat auch den Vorteil, daß sie eine verhältnismäßig einfache Ausbildung der Führungen ermöglicht, welche die längsarmierten Kanten des Deckbandes auf den Gurtkanten des Förderbandes halten und damit den Förderraum nach außen abdichten. Gemäß den Merkmalen des Anspruches 6 handelt es sich um die Verwendung gängiger Stahlprofile für diesen Zweck, die sich an den Bandtraggerüsten auf einfache Weise anbringen, insbesondere anschrauben lassen.

Mit den Merkmalen des Anspruches 7 lassen sich die für stärker belastete Deckbandgurte erforderlichen Armierungen leichter in dem Gurt unterbringen, weil die Aufkantungen einen größeren Materialquerschnitt hierfür bieten. Diese Aufkantungen werden gleichzeitig zur Führung eingesetzt und ermöglichen dadurch einen Formschluß in Querrichtung, der entsprechende Kräfte, die auf den Deckbandgurt wirken, in den Führungen abträgt.

Die Einzelheiten der Erfindung ergeben sich aus der nachfolgenden Beschreibung einer Ausführungsform anhand der Figuren in der Zeichnung; es zeigen

Figur 1 schematisch und in Seitenansicht einen Doppelgurtbandförderer gemäß der Erfindung in einer C-förmigen Anordnung,

Figur 2 eine abgeänderte Ausführungsform des erfindungsgemäßen Doppelgurtbandförderers, bei der die C-förmige Anordnung der Figur 1 zu einer Z-förmigen Anordnung mit einem zweiten Doppelgurtbandförderer gemäß der Erfindung ergänzt ist,

Figur 3 in den Figuren 1 und 2 entsprechender Darstellung eine S-förmige Anordnung des erfindungsgemäßen Doppelgurtbandförderers,

Figur 4 eine Seitenansicht der Gurte auf der Steilstrecke des jeweiligen Doppelgurtbandförderers,

Figur 5 eine Draufsicht auf den Gegenstand der Figur 4,

Figur 6 einen Schnitt längs der Linie A/A der Figur 4,

Figur 7 in vergrößerter Darstellung und in einer der Figur 6 entsprechenden Ansicht eine abgeänderte Ausführungsform des Doppelgurtbandförderers und

Figur 8 einen Doppelgurtbandförderer, der im Gegensatz zu den Darstellungen in den Figuren 1 bis 3 zur Abgasförderung eingesetzt ist.

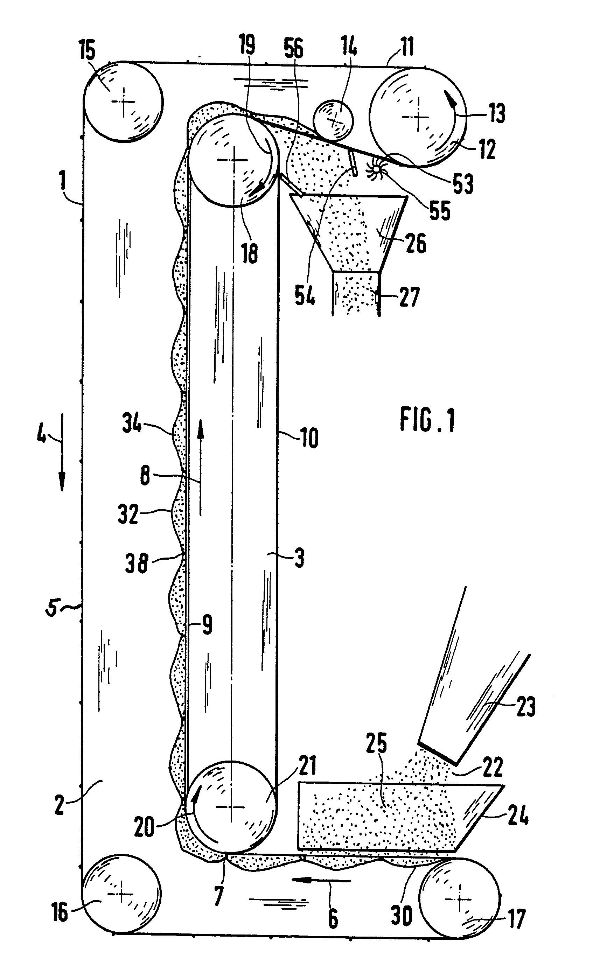

In den Figuren ist der allgemein mit 1 bezeichnete Doppelgurtbandförderer aus zwei Förderbändern, nämlich einem Deckbandförderer 2 und einem Förderband 3 zusammengesetzt. Der Deckbandförderer 2 hat gemäß der Darstellung nach Figur 1 ein außen angeordnetes, entsprechend dem Pfeil 4 zurücklaufendes Fördertrum 5 und ein entsprechend dem Pfeil 6 vorlaufendes Fördertrum 7. Das Fördertrum 7 bewegt sich mit annähernd gleicher Geschwindigkeit wie das entsprechend dem Pfeil 8 vorlaufende Fördertrum 9 des Förderbandes 3, dessen rücklaufendes Fördertrum mit 10 bezeichnet ist. Dementsprechend dreht sich die an der Kehre 11 des Deckbandes 2 angeordnete Antriebstrommel 12 entsprechend dem Pfeil 13 entgegen dem Uhrzeigersinn. Sie wirkt mit einer Druckrolle 14 zusammen. Umlenktrommeln 15 bis 17, die ebenfalls entgegen dem Uhrzeigersinn rotieren, lenken das rücklaufende Trum 5 in der dargestellten C-Form um.

Aus der beschriebenen Drehrichtung ergibt sich, daß die Antriebstrommel 18 des Förderbandes 3 sich entsprechend dem Pfeil 19 im Uhrzeigersim dreht, was auch für die mit dem Pfeil 20 gekennzeichnete Drehrichtung der Umkehre 21 des Förderbandes gilt. In Förderrichtung vor der Umkehre befindet sich eine Bandaufgabe 22, welche im wesentlichen aus einer geschlossenen Aufgaberinne 23 und einem Aufgabetrichter 24 besteht. Gemäß der dargestellten Ausführungsform wird mit der beschriebenen Doppelgurtbandanlage Beton gefördert, welcher schematisch bei 25 dargestellt ist. Am Ende der durch das Förderband 3 gegebenen Steilstrecke wird der Beton bei 26 in einen rohrförmigen Bunker oder Verteiler 27 aufgegeben.

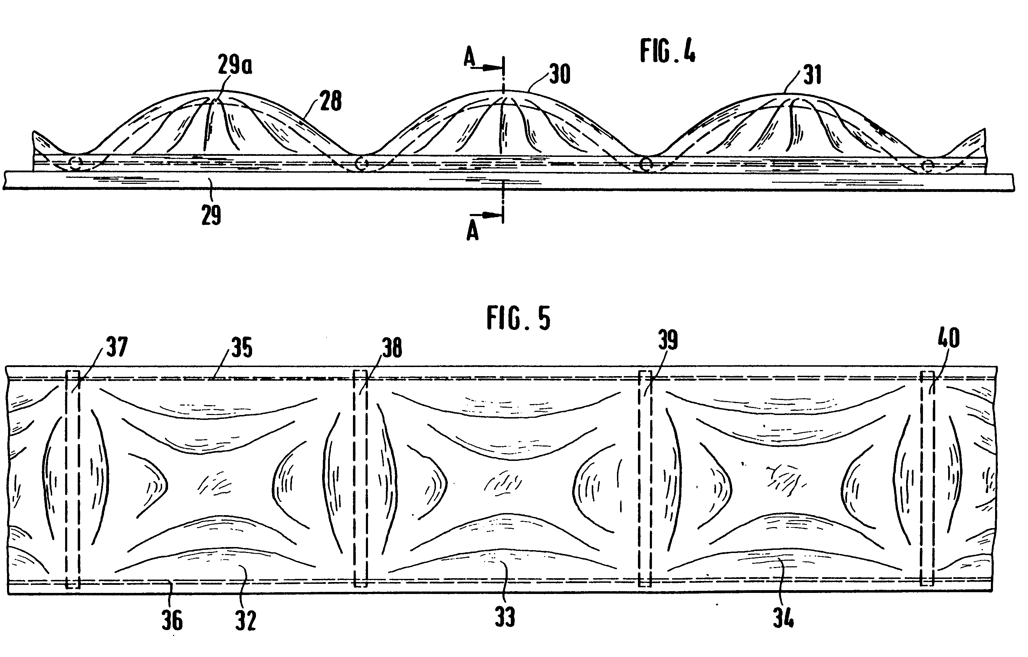

Gemäß der Darstellung in den Figuren 4 bis 6 ist unter Fortlassung der sonstigen Einzelheiten die Gurtanordnung auf der fördernden Teilstrecke wiedergegeben. Der allgemein mit 28 bezeichnete Deckbandgurt weist auf dieser Teilstrecke Einbeulungen 29 bis 31 auf, die hintereinander angeordnet sind und zusammen einen nach außen abgeschlossenen Förderraum begrenzen, dessen andere Seite von dem flachen Gurt 29 des Förderbandes 3 abgeschlossen ist. Wie die Darstellung der Figur 5 erkennen läßt, befinden sich die Einbeulungen in Feldern 32 bis 34 zwischen Armierungen des Gurtes. Dabei handelt es sich um je eine z. B. durch ein oder mehrere nebeneinander angeordnete Seile oder Kabel gebildete Längsarmierung 35, 36. Diese sind dementsprechend flexibel und lassen sich um die verschiedenen Trommeln und Rollen führen, die das Deckband unterstützen und umlenken. Außerdem sind Querarmierungen 37 bis 40 vorgesehen, die z. B. auch von Stangen aus Rundstahlabschnitten gebildet werden können, welche an die Querararmierungen durch Auffädeln angeschlossen sind. Im ganzen ergibt sich dadurch eine Leiterform der Armierungen, in der die schubfesten Querarmierungen 37 bis 40 die Sprossen und die flexiblen Längsarmierungen 35, 36 die Holme bilden.

In den Feldern 32 bis 34 ist das Gurtmaterial muldenförmig ausgeformt und bildet auf diese Weise die Einbeulungen 29 bis 31. Wie sich im übrigen aus der Darstellung der Figur 1 entnehmen läßt, liegen die Quer- und Längsarmierungen in der gleichen Ebene, die parallel zur jene des flachen Förderbandes 29 verläuft.

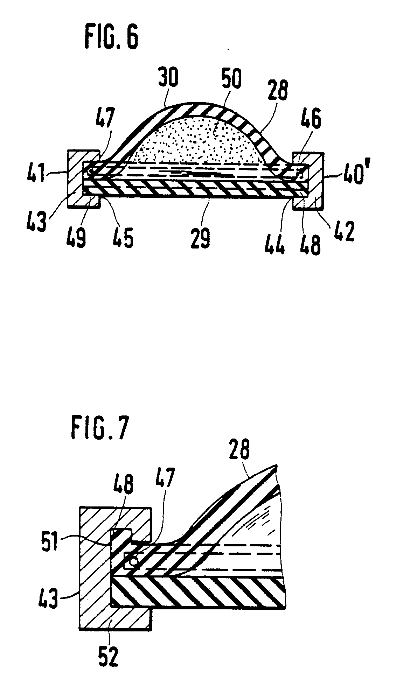

Aus der Darstellung der Figur 6 ergibt sich, daß an beiden Längskanten der Gurte 28, 29 durchgehende Längsführungen 40', 41 angeordnet sind. Diese Längsführungen sind spiegelsymmetrisch ausgebildet und aus U-förmigen Stahlprofilabschnitten 43 zusammengesetzt, welche an dem nicht dargestellten Bandtraggerüst befestigt werden. Die nach innen gerichteten Profilöffnungen 44, 45 nehmen die Randkanten 46, 47 des Deckbandes 28 und 48, 49 des Förderbandes auf. Sie gewährleisten einen gleichförmigen Dichtdruck in diesem Bandbereich, welcher den beschriebenen und allgemein mit 50 bezeichneten Förderraum nach außen abdichtet.

Abweichend von der in Figur 6 wiedergegebenen Ausführungsform weist das Deckband 28 im Ausführungsbeispiel der Figur 7 an jeder seiner Randkanten 46, 47 eine Aufkantung 48 aus dem elastomeren Werkstoff des Bandmaterials auf. Die Führungen 42, 43 sind wiederum spiegelsymmetrisch ausgebildet und, wie anhand der dargestellten Führung 43 gezeigt, C-förmig profiliert. An dem Profileinsprung 51 führt sich die Aufkantung 48 des Deckbandes 28. Der untere Profilschenkel 52 ist gerade und dementsprechend ohne Einsprung ausgebildet.

Im Betrieb des Doppelgurtbandförderers 1 nach Figur 1 bilden sich hinter der Umkehrtrommel 17 die Einbeulungen 30 unter der Belastung des Betons 25 aus. Dadurch entsteht auf der geraden Förderstrecke bis zur Umkehre 21 ein muldenförmiges Förderband, in dem eine Vielzahl von Mulden 32 bis 34 aufeinanderfolgen. Sobald die Mulden die Umkehre 21 erreichen, bildet der Gurt des Förderbandes 3 im Fördertrum 9 eine Abdeckung der Mulden 32 bis 34, wobei im Bereich der Querarmierungen, wie beispielsweise bei 38 dargestellt, auch eine Abdichtung der aufeinanderfolgenden Mulden 32 bis 34 gegeneinander stattfindet. Dadurch wird das der Schwerkraft folgende Fördergut daran gehindert, an diesen Stellen gegenüber den Fördergurten zu schlüpfen. Das Betonfördergut wird dementsprechend gemäß dem Pfeil 8 nach oben gefördert und schließlich um die Antriebsrolle 19 herumgeführt. Hinter der Antriebstrommel wird der Beton aus der dort dargestellten Mulde abgeworfen und gelangt in den Bunker 27.

An der Druckrolle 14 werden die Mulden 32 bis 34 ausgebeult. Es entsteht dadurch eine flache Form des Fördergurtes schon bei 53, d. h. vor Erreichen der Umschlingung der Antriebstrommel 12. Sie wird für einen stationären Abstreifer 54 und eine Reinigungsbürste 55 ausgenutzt, welche den Deckbandgurt vor dem Rücklauftrum säubert. Im Hinblick auf die verschmutzenden Eigenschaften des Fördergutes Beton ist ein weiterer Abstreifer 56 für das rücklaufende Trum 10 des Förderbandes vorgesehen.

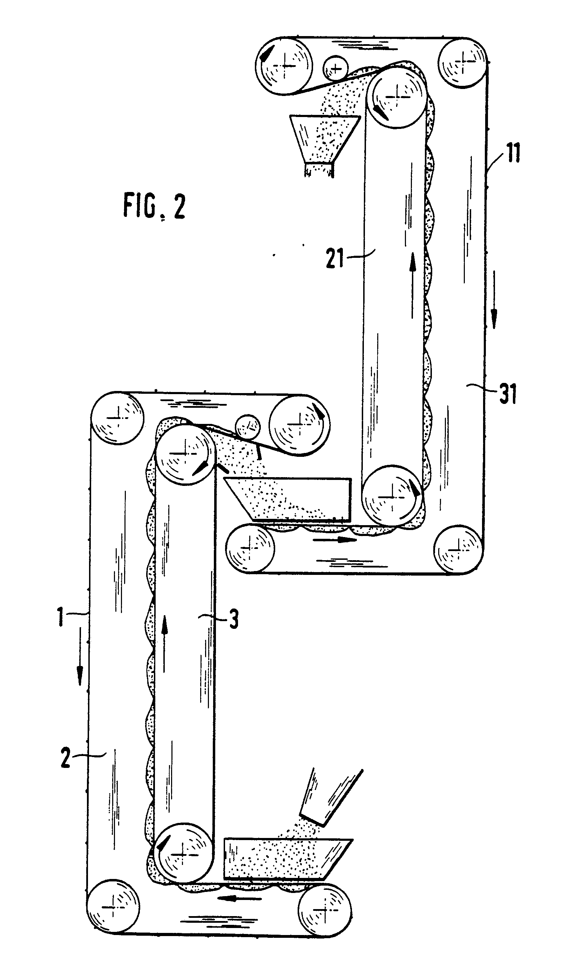

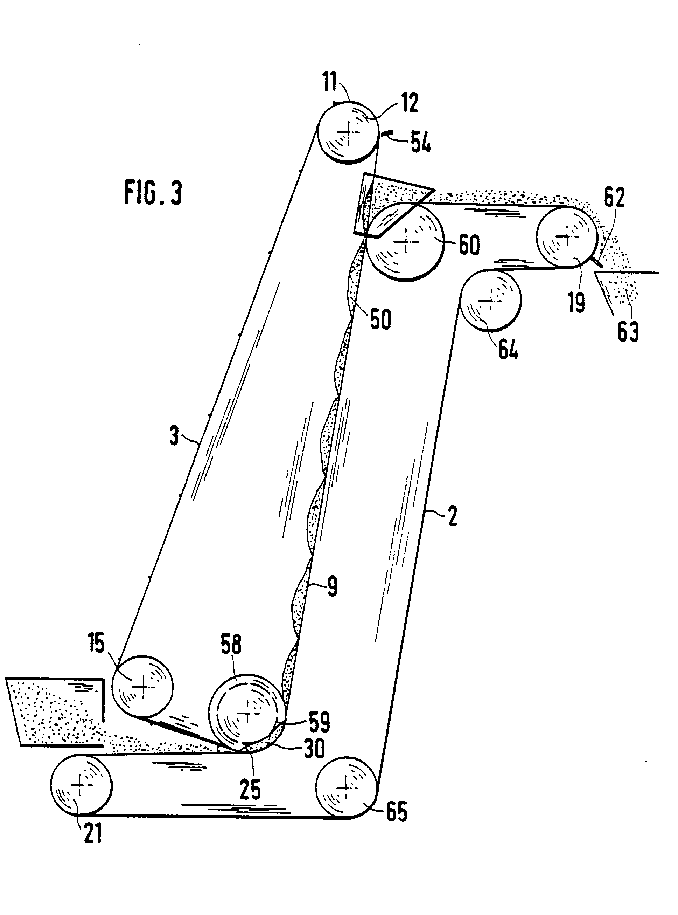

In der Darstellung der Figur 2 ist die Möglichkeit wiedergegeben, durch die Hintereinanderschaltung mehrerer Doppelgurtbandförderer 1 gemäß der Darstellung der Figur 1 größere Förderhöhen zu überwinden. Dies geschieht gemäß der Ausführungsform nach Fig. 3 mit Hilfe von zwei Doppelgurtbandförderern 1 bzw. 1', wobei die Einzelteile des im übrigen weitgehend mit dem Doppelgurtbandförderer 1 übereinstimmenden Doppelgurtbandförderer 1' mit den gleichen, jedoch mit einem Indexstrich versehenen Bezugszeichen identifiziert sind. Die Figur 3 zeigt das Zusammenwirken eines S-förmig verlegten Förderbandes 2 mit einem Deckband 3, dessen Gurt annähernd nach den Seiten eines schiefwinkligen Dreieckes geführt ist. Im Scheitel dieser Umlauf strecke liegt die Antriebstrommel 12, während die folgende Kehre 15 einer Einbeultrommel 58 gegenüberliegt. Der Trommelmantel weist taschenförmige Vertiefungen 59 auf, in die die Mulden 30 des Deckbandes eingebeult werden. Das geschieht unter dem Druck des Betons 25, welcher zwischen dem vorlaufenden Trum 9 des Förderbandes und dem Deckband im Umschlingungsbereich des Deckbandes mit der Einbeultrommel 58 eingequetscht wird.

Im Gegensatz zur Ausbildung des Doppelgurtbandförderers nach den Figuren 1 und 2 ist im Ausführungsbeispiel der Figur 3 zum Ausbeulen die Antriebstrommel 12 der Kehre 11 vorgesehen. Deswegen wirkt der Abstreifer 54 auf die Umschlingung des Deckbandes, weil sich die erforderliche flache Form erst auf der Umlenktrommel 12 ausbildet.

Entsprechend der S-förmigen Führung des Förderbandes wird der Beton 25 hinter der Umkehre 21 auf das Obertrum 9 des Förderbandes 3 aufgegeben. Die Öffung des Förderraumes 50 erfolgt an der Kehre 11 und einer Umlenktrommel 60 des Förderbandes 3, zwischen der und der Antriebstrommel 19 eine annähernd ebene Förderstrecke vorhanden ist. Mit der Umschlingung des Gurtes des Förderbandes 3 auf der Antriebstrommel 19 wirkt ein Abstreifer 62 zusammen, welcher das Fördergut in einen Trichter 63 übergibt. Im übrigen ist der Untergurt, d. h. das rücklaufende Trum des Förderbandes 3 entsprechend der S-Form mit Hilfe von Umlenktrommeln oder Rollen 64, 65 geführt, wobei der Fördergurt wie auch schon im Ausführungsbeispiel nach den Figuren 1 und 2 auf der gesamten Umlaufstreke flach gehalten wird.

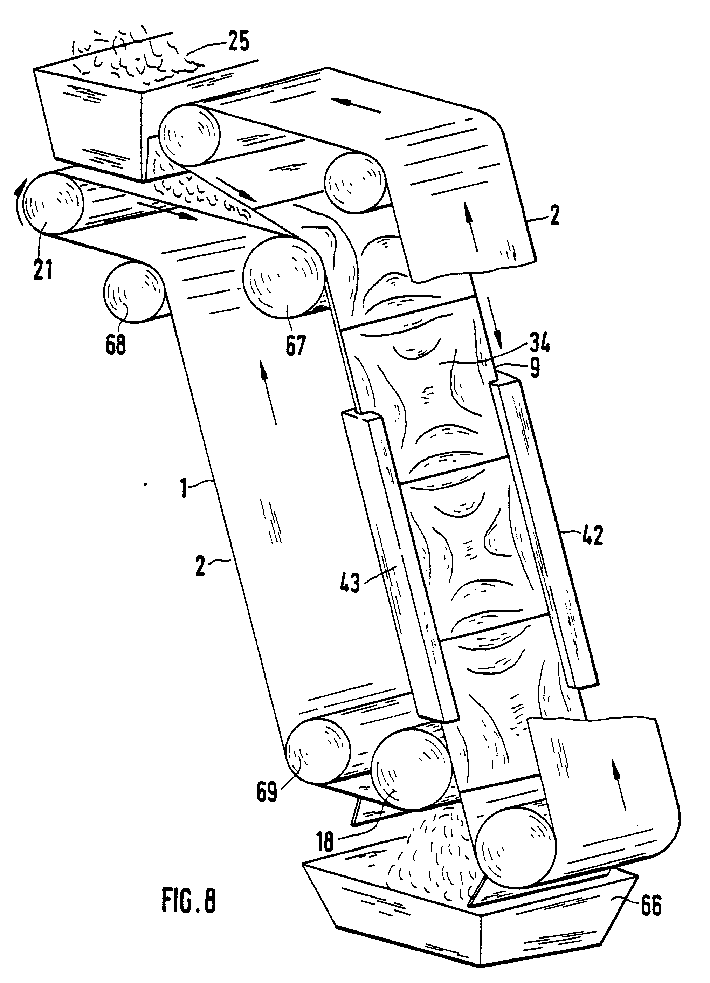

Beim Ausführungsbeispiel der Figur 8 dient der Doppelgurtbandförderer 1 als Bremsförderer und damit zur Förderung des Betons 25 von einem höheren Niveau längs einer Steilstrecke auf ein niedrigeres Niveau in den Trichter 66. Die Umlaufrichtung der Fördergurte ist durch die Pfeile gekennzeichnet. Das Deckband 2 bildet auf der Steilstrecke wiederum die beschriebenen Mulden aus, was durch die abgebrochene Darstellung, wie bei 34 gezeichnet, von außen erkennbar wird. Zu diesem Zweck sind auch die beiden durchgehenden Seitenführungen 42, 43 abgebrochen wiedergegeben. Wie im Ausführungsbeispiel der Figuren 1 und 2 werden die Ausbeulungen durch den Druck des Fördergutes zwischen dem Deckbandgurt und dem Förderbandgurt über der Umlenktrommel 67 des Förderbandes 2 ausgebildet. Die Umlenktrommel 67 folgt in Förderrichtung auf die Umkehre 21 des Förderbandes, der entsprechend im S-förmigen Verlauf des Förderbandes 2 im zurücklaufenden Trum eine Druckrolle 68 vorgeschaltet ist. Die Antriebstrommel 18 des Förderbandes 2 läuft wiederum im Uhrzeigersinn um. Ihr ist entsprechend der Formgebung des Bandumlaufes im Förderband 2 eine Druckrolle 69 nachgeschaltet.

Die Ausführungsbeispiele der Erfindung sind vorstehend anhand der Förderung von Beton erläutert worden. Beton neigt bei hohen Fördergeschwindigkeiten im Bereich der Abwürfe, welche hinter der Steilstrecke angeordnet sind, zu Entmischungen. Durch die gegeneinander abgeschlossenen muldenförmigen Teilräume des Förderraumes und durch eine relativ geringe Bandgeschwindigkeit wird dieser Entmischungsgefahr begegnet. Die Bandgeschwindigkeit läßt sich erhöhen, wenn es sich um ein Fördergut handelt, das gegen Entmischungen unempfindlich ist, oder bei dem Entmischungen keine Rolle spielen. Abgesehen von schlammförmigen Fördergütern anderer Zusammensetzung kommt daher der Doppelgurtbandförderer gemäß der Erfindung auch für Schüttgüter, insbesondere feinkörniger Zusammensetzung in Betracht.

**Patentansprüche**

1. Doppelgurtbandförderer (1), bei dem auf einer steilen Förderstrecke der flache Gurt (10) eines endlos umlaufenden Förderbandes (3) mit einem mitlaufenden Gurt (5, 28) eines Deckbandes (2) einen geschlossenen Förderraum bildet, an dessen Längsseiten die Kanten beider Gurte mit Führungen (40', 41) aufeinanderliegend gehalten werden, wobei der Förderraum durch Einbeulung (29a bis 31) wenigstens eines der Gurte (10; 5, 28) zwischen den Führungen (40', 41) gebildet und am Ende der Steilstrecke durch das um eine Kehre (11) geführte Deckband (2) geöffnet und der eingebeulte Gurt für den Rücklauf ausgebeult wird, wobei auf der Steilstrecke der den Förderraum begrenzende Gurt des Förderbandes (3) eben gehalten ist, und wobei der Deckbandgurt (5, 28) in seinen Längsseiten angeordnete Zugarmierungen (35, 36) aufweist,
dadurch gekennzeichnet,
daß in dem Deckbandgurt (5, 28) mit den Zugarmierungen (35, 36) zusammenwirkende, schubsteife Querarmierungen (37 bis 40) untergebracht sind, zwischen denen und den Zugarmierungen (35, 36) die Aus- und Einbeulungen (29a bis 31) ausgebildet sind, und daß die Führungen (40', 41) der aufwärts gehenden Gurtstränge durchgehend ausgebildet sind.

2. Doppelgurtbandförderer nach Anspruch 1,
dadurch gekennzeichnet,
daß die Deckbandbereiche (32 bis 34) zwischen den Längs- und den Querarmierungen (35, 36; 37 bis 40) nicht armiert und muldenftörmig einbeulbar sind.

3. Doppelgurtbandförderer nach einem der Ansprüche 1 oder 2,
dadurch gekennzeichnet,
daß die von den Längs- und Querarmierungen (35, 36; 37 bis 40) eingeschlossenen Gurtbereiche als schalenförmige Formkörper ausgebildet sind, welche die Einbeulungen (32 bis 34) bilden und die flache Form des Gurtes ausbeulbar ist.

4. Doppelgurtbandförderer nach einem der Ansprüche 1 bis 3,
dadurch gekennzeichnet,
daß hinter oder auf der zum Ausbeulen des Deckbandgurtes dienenden Trommel bzw. Rolle (12, 14) Abstreifer der den Förderraum begrenzenden Deckbandgurtseite angebracht sind.

5. Doppelgurtbandförderer nach einem der Ansprüche 1 bis 4,
dadurch gekennzeichnet,
daß die Querarmierungen (37 bis 40) von geraden Stirnabschnitten gebildet werden, die an ihren Enden mit den Längsarmierungen (35, 36) verbunden sind, wobei die die Querarmierungen (37 bis 40) überdeckenden Materialteile auf dem Förderband (29) abdichten.

6. Doppelgurtbandförderer nach einem der Ansprüche 1 bis 3,
dadurch gekennzeichnet,
daß die durchgehenden Führungen (40', 41) Profilleisten (42, 43; 51, 52) sind, welche in einer Profilöffnung die aufeinanderliegenden Gurtkanten (46, 47; 48, 49) aufnehmen.

7. Doppelgurtbandförderer nach einem der Ansprüche 1 bis 4,
dadurch gekennzeichnet,
daß die Profilleisten U-förmig und die geführten Bandlängskanten (46, 47; 48, 49) flach ausgebildet sind.

8. Doppelgurtbandförderer nach einem der Ansprüche 1 bis 6,
dadurch gekennzeichnet,
daß die Profilleisten (42, 43) der Führungen (40', 41) C-förmig mit einem Einsprung (51) und einem Flachschenkel (52) ausgebildet sind und der Gurt (28) des Deckbandes zwei an seinen Bandkanten Aufkantungen (48) aufweist, die mit den Einsprüngen (51) der Führungsprofile zusammenwirken.

9. Doppelgurtbandförderer nach einem der Ansprüche 1 oder 2,
dadurch gekennzeichnet,
daß zur Herstellung der Einbeulungen (29a bis 31) der Druck des Fördergutes (25) auf den Deckbandförderer dient.

10. Doppelgurtbandförderer nach einem der Ansprüche 1 bis 9,
dadurch gekennzeichnet,
daß zur Ausbildung der Einbeulungen (29a bis 31) eine Einbeultrommel (58) mit dem Trommelmantel aus geformten Vertiefungen (59) dient, welche der eingebeulten Form entsprechen.

## Claims

1. A double belt conveyor (1) in which the flat strip (10) of a endless conveyor belt (3), having a strip (5, 28) of a covering belt (2) running simultaneously therewith, forms a closed transport area on a vertical conveying run, on the longitudinal sides of which the edges of both belts are held against one another by guides (40', 41), whereby the transport area is formed by means of recesses (29a to 31) in at least one of the belts (10; 5, 28) between the guides (40', 41) and opens at the end of the vertical run by the covering belt (2) which is fed around a bend (11) and the recessed belt is flattened out for the return run, whereby the strip of the conveyor belt (3) delimiting the transport area is also held level on the vertical run, and whereby the covering belt (5, 28) has pulling fixtures (35, 36) arranged in its longitudinal sides, characterised in that shear resistant transverse fixtures (37 to 40) cooperating with the pulling fixtures (35, 36) are accommodated in the covering belt (5, 28), that the recesses and protruberances (29a to 31) are formed between the transverse fixtures and the pulling fixtures (35, 36), and that the guides (40' 41) of the upwardly moving belt lines are continuously formed.

2. A double belt conveyor according to Claim 1, characterised in that the covering belt areas (32 to 34) between the longitudinal and the transverse fixtures (35, 36; 37 to 40) are not reinforced and are indentable in a trough-shaped manner.

3. A double belt conveyor according to Claim 1 or 2, characterised in that the belt areas enclosed by the longitudinal and transverse fixtures (35, 36; 37 to 40) are formed as dish-shaped moulded members, which form the recesses (32 to 34) and the level shape of the belt when flattened.

4. A double belt conveyor according to any one of claims 1 to 3, characterised in that wipers of the side of the covering belt delimiting the transport area are fixed behind or on top of the drum or roller (12, 14) serving for flattening of the covering belt.

5. A double belt conveyor according to any one of claims 1 to 4, characterised in that the transverse fixtures (37 to 40) are formed from straight front sections which are connected at their ends with the longitudinal fixtures (35, 36), whereby the material parts covering the transverse fixtures (37 to 40) seal on the conveyor belt (29).

6. A double belt conveyor according to any one of claims 1 to 3, characterised in that the continuous guides (40' 41) are profiled strips (42, 43; 51, 52) which carry the belt edges (46, 47; 48, 49) against each other in a profiled aperture.

7. A double belt conveyor according to any one of claims 1 to 4, characterised in that the profiled strips are U-shaped and the guided longitudinal edges of the belts (46, 47; 48, 49) are flat.

8. A double belt conveyor according to any one of claims 1 to 6, characterised in that the profiled strips (42, 43) of the guides (40', 41) are C-shaped with a recess (51) and a flat portion (52) and the strip (28) of the covering belt has two lips (48) on its edges which cooperate with the recesses (51) of the guide profiles.

9. A double belt conveyor according to claim 1 or 2, characterised in that the pressure of the goods to be transported (25) on the covering belt conveyor serves for the formation of the recesses (29a to 31).

10. A double belt conveyor according to claims 1 to 9, characterised in that an indenting drum (58) having a cylindrical portion formed with moulded recesses (59) which correspond to the recess shape serves for the formation of the recesses (29a to 31).

## Revendications

1. Convoyeur (1) à courroie double, comportant une courroie de transport sans fin (3) à bande plate (10), disposée suivant un trajet de transport en pente raide, et qui coopère avec une courroie de recouvrement (2) dont la bande (5, 28) accompagne le pouvement de la bande (10) de la courroie de transport (3) sur le trajet de transport en pente raide, pour constituer au moins une cavité de transport fermée, dont les bords longitudinaux correspondent aux bords superposés des deux bandes associées, maintenus appliqués l'un sur l'autre par des glissières de guidage (40' , 41); chaque cavité de transport étant constituée par une poche en forme de cuvette (29a à 31), réalisée par enfoncement dans au moins l'une des bandes (10; 5, 28) des courroies, entre les deux glissières de guidage (40' 41), et qui s'ouvre à l'extrémité du trajet de transport en pente raide, sous l'effet de l'enroulement de la bande de recouvrement (2) à l'endroit d'un point de renvoi (11); chaque poche en cuvette de la courroie de recouvrement (2) se trouvant ensuite écrasée et mise à plat pour le trajet de retour; la bande de la courroie de transport (3) qui délimite chaque cavité de transport étant maintenue à plat sur son trajet de transport en pente raide, et la courroie de recouvrement (5, 28) comportant dans ses bords longitudinaux des armatures (35, 36) qui travaillent en traction; le convoyeur étant caractérisé en ce que la courroie de recouvrement (5,28) est pourvue d'armatures transversales (37 à 40), qui coopèrent avec les armatures longitudinales travaillant en traction (35, 36) et qui sont bloquées chacune en place; en ce que les poches en forme de cuvettes (29a à 31) de la courroie de recouvrement (5, 28) se trouvent situées entre les armatures transversales (37 à 40) et les armatures travaillant à la traction (35, 36); et en ce que les gissières de guidage (40', 41) des branches ascendantes sont constituées par des éléments continus.

2. Convoyeur à courroie double conforme à la revendication 1, caractérisé en ce que les zones (32 à 34) de la courroie de recouvrement (5, 28) qui sont situées entre les armatures longitudinales (35, 36) et les armatures transversales (37 à 40) de cette courroie ne comportent aucune armature, et sont déformables pour pouvoir s'enfoncer chacune en forme de cuvette.

3. Convoyeur à courroie double conforme à l'une des revendications 1 ou 2, caractérisé en ce que les zones de la courroie de recouvrement (5, 28) qui sont situées entre les armatures longitudinales (35, 36) et les armatures transversales (37 à 40) de cette courroie ont subi une mise en forme préalable, pour constituer par enfoncement les poches en forme de cuvette (32 à 34), ces poches pouvant ensuite s'écraser à plat dans le plan de la bande de la courroie.

4. Convoyeur à courroie double conforme à l'une des revendications 1 à 3, caractérisé en ce qu'il comporte, en aval du tambour ou du rouleau (12, 14) qui sert à écraser à plat les poches en forme de cuvettes de la bande de recouvrement (5, 28), des racloirs disposés en regard de la face de la bande de recouvrement qui délimite chacune des cavités de transport.

5. Convoyeur à courroie double conforme à l'une des revendications 1 à 4, caractérisé en ce que les armatures transversales (37 à 40) sont constituées par des morceaux de tiges rectilignes, ayant leurs extrémités fixées aux armatures longitudinales (35, 36); et en ce que les parties de l'âme de la courroie de recouvrement (5, 28) dans lesquelles sont noyées les armatures transversales (37 à 40) sont adaptées à s'appliquer de manière étanche sur la courroie de transport (29).

6. Convoyeur à courroie double conforme à l'une des revendications 1 à 3, caractérisé en ce que les glissières de guidage continues (40', 41) sont constituées par des tronçons de profilés (42, 43; 51, 52), qui présentent, en coupe transversale, une ouverture adaptée à recevoir les bords superposés (46, 47 ; 48, 49) des deux courroies associées.

7. Convoyeur à courroie double conforme à l'une des revendications 1 à 4, caractérisé en ce que les glissières de guidage (40', 41) ont un profil interne en U, et en ce que les bords (46, 47 ; 48, 49) des bandes associées qui passent dans ces glissières ont un profil plat.

8. Convoyeur à courroie double conforme à l'une des revendications 1 à 6, caractérisé en ce que les glissières de guidage (40', 41) ont un profil interne en C, qui présente une partie en retrait (51) et une branche plate, et en ce que les deux bords de la courroie de recouvrement (28) portent chacun un bourrelet (48), qui coopère avec la partie en retrait (51) du profil de la glissière de guidage correspondante.

9. Convoyeur à courroie double conforme à l'une des revendications 1 ou 2, caractérisé en ce que les poches en forme de cuvettes (29a à 31) de la courroie de recouvrement (5, 28) sont prévues pour se déployer sous l'effet de la poussée des matières (25) transportées par le convoyeur.

10. Convoyeur à courroie double conforme à l'une des revendications 1 à 9, caractérisé en ce qu'il comporte un tambour à cuvettes (58), dont la paroi présente des enfoncements en forme de cuvettes (59) correspondant à la forme des poches en cuvettes (29a-31) de la courroie de recouvrement, pour faciliter le déploiement de ces poches.

FIG.1

FIG. 2

**FIG.3**

FIG. 4

29a        A          30              31

28

29         A

FIG. 5

37      35       38              39        40

36   32            33              34

0 192 715

FIG. 6

FIG. 7

FIG.8